Europäisches Patentamt

(19) European Patent Office

Office européen des brevets

(11) **EP 0 974 185 B1**

(12) **FASCICULE DE BREVET EUROPEEN**

(45) Date de publication et mention
de la délivrance du brevet:
**29.05.2002 Bulletin 2002/22**

(51) Int Cl.⁷: **H02K 33/06**, H02K 33/16

(21) Numéro de dépôt: **99901707.2**

(22) Date de dépôt: **03.02.1999**

(86) Numéro de dépôt international:
**PCT/FR99/00235**

(87) Numéro de publication internationale:
**WO 99/40673 (12.08.1999 Gazette 1999/32)**

(54) **ACTIONNEUR LINEAIRE AMELIORE**

VERBESSERTER LINEARANTRIEB

IMPROVED LINEAR ACTUATOR

(84) Etats contractants désignés:
**AT BE CH DE DK ES FI FR GB GR IE IT LI LU MC
NL PT SE**

(30) Priorité: **09.02.1998 FR 9801502**

(43) Date de publication de la demande:
**26.01.2000 Bulletin 2000/04**

(73) Titulaire: **MOVING MAGNET TECHNOLOGIES
S.A.
25000 Besançon (FR)**

(72) Inventeurs:
• **OUDET, Claude
F-25000 Besançon (FR)**
• **GANDEL, Pierre
F-25660 Besançon (FR)**
• **FRACHON, Didier
F-25000 Besançon (FR)**
• **BESSON, Christophe
F-25000 Besançon (FR)**

(74) Mandataire: **Breese, Pierre
Breese - Majerowicz - Simonnot
3, avenue de l'Opéra
75001 Paris (FR)**

(56) Documents cités:
WO-A-93/01646          DE-A- 3 820 711
US-A- 5 175 457          US-A- 5 386 275

## Description

La présente invention concerne le domaine des actionneurs linéaires à aimant permanent généralement mince. De tels actionneurs linéaires comportent une structure statorique à deux pôles excités par une bobine électrique, et une partie mobile comportant une culasse et une partie aimantée.

Le principe général de tels actionneurs est décrit dans le brevet FR 97/10585.

De tels actionneurs mettent en oeuvre une structure magnétique composée de trois aimants minces aimantés en sens alternés.

Un premier inconvénient des actionneurs de l'art antérieur est de nécessiter trois aimants permanents. Les aimants performants sont relativement chers, et les structures de l'art antérieur présentent de ce fait un coût de fabrication élevé.

Un second inconvénient est lié au fait que l'alternance de polarité des aimants minces oblige à aimanter les aimants avant assemblage, puis de coller les trois aimants sur la culasse.

Un troisième inconvénient des actionneurs de l'art antérieur provient du fait que la force magnétostatique produit par l'architecture de ces actionneurs tend à ramener fortement la partie mobile en milieu de course, ce qui peut s'avérer gênant pour certaines applications.

L'objet de la présente invention est de proposer un actionneur amélioré, remédiant à ces inconvénients tout en conservant une force par ampères-tours satisfaisante.

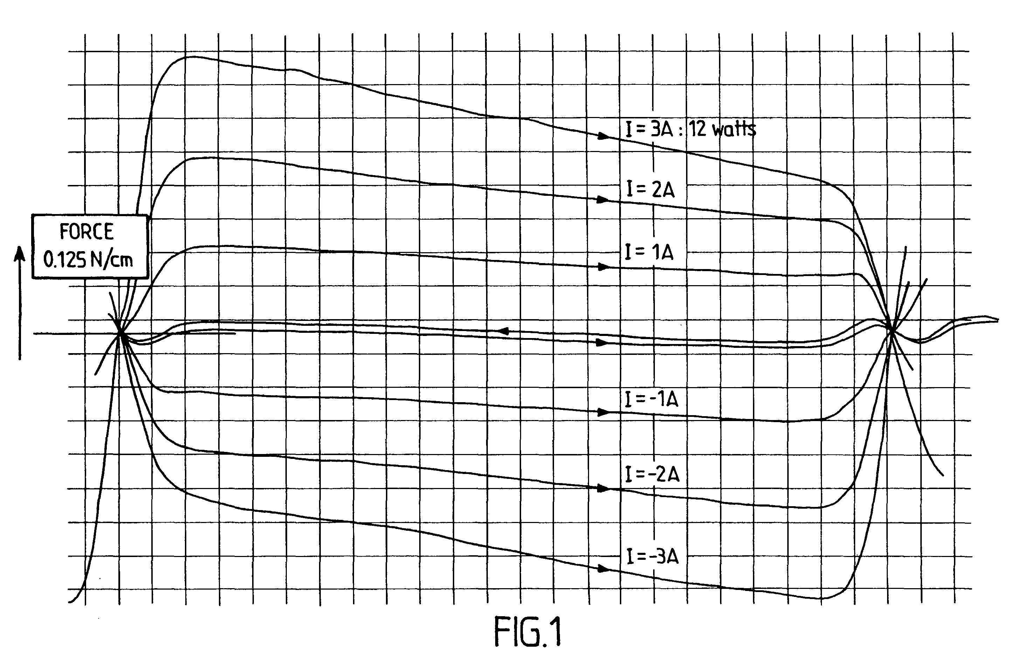

On a proposé dans l'état de la technique des actionneurs présentant une partie mobile formée par un aimant enchâssé dans une culasse en un matériau magnétique doux. Une telle solution est proposée dans le brevet américain US5,175,457, ou dans la figure 1 du brevet WO86/05928. La demanderesse a établi que la force ne reste pas constante en fonction de la position lorsque le nombre d'ampère-tours appliqués à la bobine augmente (voir la figure 1).

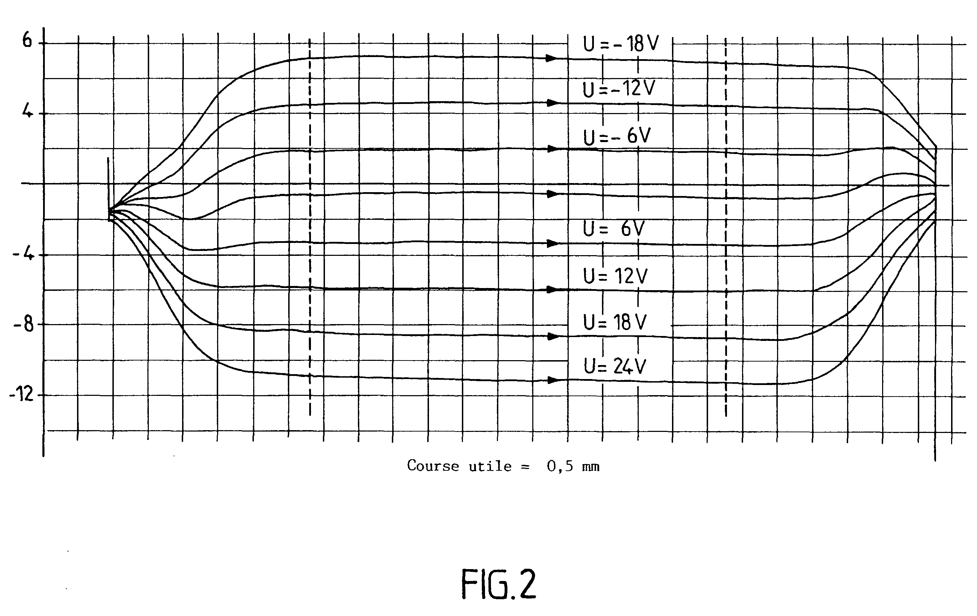

On a également proposé des solutions dans laquelle l'aimant est fixé sur la surface de la culasse. Une telle solution est proposée dans le brevet américain US4,195,277. Pour de tels actionneurs, la force reste sensiblement constante le long de la course utile. Dans ce cas, la demanderesse a établi que le rendement est médiocre, et en tout cas inférieur au rendement des actionneurs du premier type (voir la figure 2). Le but de l'invention est de proposer un actionneur présentant une force sensiblement constante le long de la course avec un rendement élevé. L'invention objet du présent brevet résulte de l'analyse par la demanderesse de l'incidence de la position de l'aimant à l'intérieur de la culasse sur les caractéristiques d'un actionneur, et de la conception à partir de cette analyse d'un nouveau type d'actionneur présentant des performances optimisées.

Le but de l'invention est résolu par un actionneur électromagnétique présentant les caractéristiques énoncées dans la revendication 1.

A cet effet, l'invention concerne un actionneur électromagnétique linéaire comportant une structure statorique à deux pôles excités par au moins une bobine électrique, et une partie mobile comportant une culasse et une partie aimantée caractérisé en ce que la partie mobile comporte un ou deux aimants permanents aimantés selon une direction perpendiculaire au plan de l'entrefer logés dans une cavité prévue dans la culasse mobile réalisée en un matériau ferromagnétique.

La profondeur de la cavité e est choisie de façon judicieuse afin d'augmenter la force fournie par l'actionneur, par rapport au cas sans cavité (e=0), tout en conservant une force sensiblement constante le long de la course utile.

Lorsque l'actionneur n'est pas saturé, la force créée dans la direction OX du dégré de liberté de la partie mobile peut être décomposée en trois composantes : la force magnétostatique $F_0$ (sans courant), souvent négligeable sur la course utile $Xc$, un terme de force polarisé $F_{nl}$ proportionnel aux ampères-tours $nl$, et un terme de force $F_{nl2}$, proportionnel au carré des ampères-tours, dû à la réluctance variable engendrée par la cavité (voir les figures 1 et 2):

$$F \approx F_{nl} + F_{nl}{}^2$$

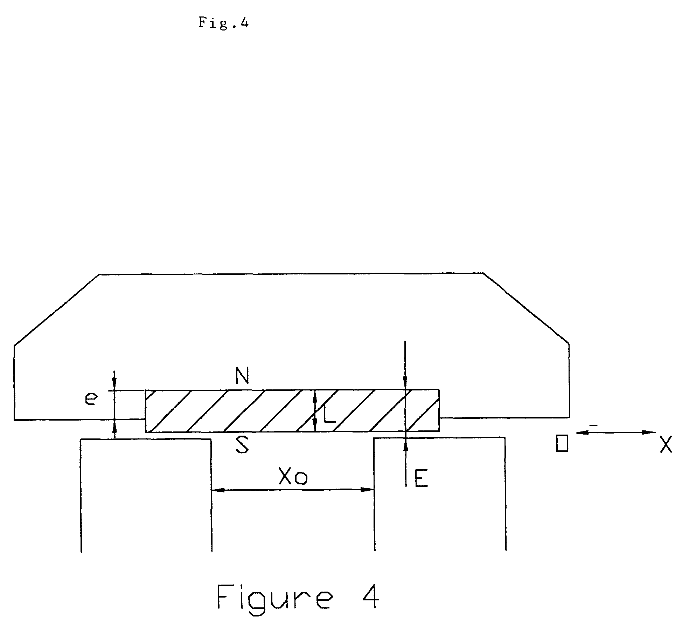

Pour une valeur d'ampères-tours $nl$ donnée, les termes de force augmentent lorsque l'on augmente l'épaisseur e de la cavité dans laquelle est placé l'aimant (voir les notations à la figure 4).

Sans cavité, e=0, $F_{nl2}=0$.

Le terme de force $F_{nl}$ est quasiment constant le long de la course utile, quelle que soit la valeur de e. Par contre, le terme $F_{nl2}$ varie linéairement avec la position. Afin d'obtenir une force sensiblement constante sur toute la course, pour une valeur d'ampères-tours donnée, il faut garder un rapport $F_{nl2}/F_{nl}$ relativement faible, par exemple inférieur à 15%. Ce rapport peut être exprimé, en première approximation, par une relation du type

$$\frac{F_{nl}{}^2}{F_{nl}} \approx 0.25 \cdot \frac{X^2}{1-X} \cdot \frac{ni}{H_c \cdot L}$$

où X=e/E représente un coefficient d'encastrement, avec E désignant l'entrefer entre le fond de la cavité dans laquelle est placé l'aimant et le plan passant par la surface des pôles statoriques, sans déduction de l'épaisseur de l'aimant.

$nl$ est le potentiel magnétique créé dans le circuit magnétique par le courant traversant la ou les bobines ;

$H_c \cdot L$ est le potentiel magnétique de l'aimant avec $H_c$ son champ coercitif et L son épaisseur dans le sens de l'aimantation.

Le rapport $F_{nl2}/F_{nl}$ est strictement croissant avec la profondeur de la cavité e.

Pour un aimant et une valeur d'ampères-tours donnés, la hauteur e de la cavité est choisie aussi grande que possible, afin d'augmenter la force, en gardant un rapport $F_{nl2}/F_{nl}$ relativement faible, par exemple inférieur à 0.15, pour obtenir une force sensiblement constante le long de la course.

La profondeur de la cavité e est alors choisie de façon judicieuse (0.1L < e < 0.9L), par un calcul et/ou par une simulation appropriés, afin d'optimiser la force fournie par l'actionneur.

Pour les très faibles valeurs d'ampères-tour (ni<100At) la profondeur de la cavité sera de préférence supérieure à 50% de l'épaisseur de l'aimant, préférentiellement de l'ordre de 80%.

Pour les valeurs d'ampères-tour importantes la profondeur de la cavité sera de préférence inférieure à 50% de l'épaisseur de l'aimant, préférentiellement de l'ordre de 40%.

La relation définissant le rapport $F_{nl2}/F_{nl}$ peut être déterminée de façon rigoureuse et précise en prenant en compte les fuites et la perméabilité relative du fer.

Selon une première variante de réalisation, on utilise deux aimants, aimantés dans le même sens, et partiellement encastrés dans deux cavités situées chacune à une extrémité de la culasse ferromagnétique.

Selon une première variante, la structure statorique présente deux branches entourées chacune par une bobine électrique.

Selon une deuxième variante, la structure statorique est de forme tubulaire et présente un logement annulaire intérieur dans lequel est logée une bobine annulaire, la partie mobile étant formée par une culasse tubulaire intérieure ferromagnétique présentant un logement annulaire de profondeur e dans lequel est positionné un aimant annulaire aimanté radialement.

Selon une troisième variante, l'actionneur selon l'invention comporte une structure statorique intérieure de forme tubulaire et présente un logement annulaire dans lequel est logée une bobine annulaire, la partie mobile étant formée par une culasse tubulaire extérieure ferromagnétique présentant un logement annulaire de profondeur e dans lequel est positionné un aimant annulaire aimanté radialement.

Selon une variante, l'actionneur linéaire selon l'invention comporte deux parties mobiles, les aimants d'une partie mobile étant aimantés dans le sens contraire des aimants de l'autre partie mobile, sous l'effet du courant, les deux parties mobiles se déplacent dans le sens opposé.

L'invention sera illustrée dans ce qui suit en référence aux dessins annexés où :

- la figure 1 représente un diagramme des forces en fonction de la position et des ampères tours des actionneurs selon l'art antérieur ;
- la figure 2 représente un diagramme des forces en fonction de la position et des ampères tours des actionneurs selon l'invention ;
- la figure 3 représente une vue en coupe médiane d'un premier exemple de réalisation ;
- la figure 4 présente une vue schématique faisant apparaître les différentes dimensions.
- la figure 5 représente une vue en coupe d'un deuxième exemple de réalisation :
- la figure 6 représente une vue en coupe d'un troisième exemple de réalisation,
- la figure 7 représente une variante de réalisation comportant une partie mobile à deux aimants.
- la figure 8 représente un exemple de réalisation comportant deux parties mobiles.
- la figure 9 représente une variante de réalisation comportant deux parties mobiles.

Selon une première variante préférée, la largeur des pôles statoriques est supérieure ou égale à Xc, de préférence sensiblement égale à Xc+E pour obtenir une force à courant constant variant très peu sur toute la course, où Xc désigne la course utile de l'organe mobile dans la zone de force résiduelle en l'absence de courant sensiblement nulle et E désigne l'entrefer entre le fond de la cavité dans laquelle est placé l'aimant et le plan passant par la surface des pôles statoriques, sans déduction de l'épaisseur de l'aimant.

Selon une variante avantageuse, la largeur de la culasse mobile est supérieure ou égale à 3Xc+Xo, de préférence sensiblement égale 3Xc+Xo+3E, où Xo est l'écartement entre les pôles statoriques.

Selon une variante de réalisation, l'organe mobile présente un seul aimant partiellement encastré dans une cavité située, dans la direction OX, sensiblement au milieu de la culasse ferromagnétique, la cavité et l'aimant ayant une largueur supérieure ou égale à Xc+Xo, de préférence sensiblement égale Xc+Xo+E.

Selon une variante de réalisation, l'organe mobile présente deux aimants partiellement encastrés dans deux cavités situées chacune à une extrémité de la culasse ferromagnétique, chaque cavité et chaque aimant ayant une largueur dans la direction OX supérieure ou égale à Xc, de préférence sensiblement égale à Xc+E.

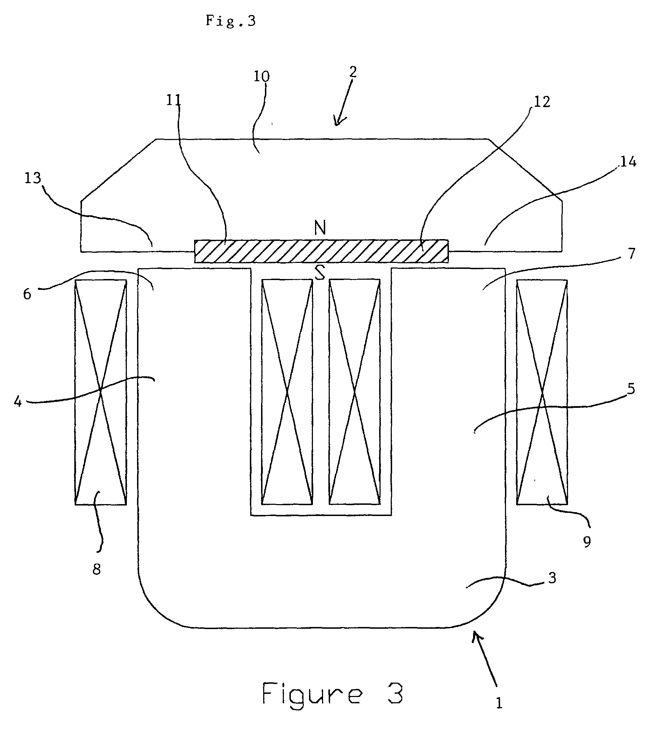

La figure 3 représente une vue en coupe d'un premier exemple de réalisation. L'actionneur est formé par une partie statorique (1) et une partie mobile (2).

La partie statorique (1) est formée par une pièce en un matériau ferromagnétique (3) présentant deux branches (4, 5) présentant des pôles (6, 7) de largeur sensiblement égale à Xc+E.

Chacune des branches statoriques (4, 5) est entourée par une bobine électrique respectivement (8, 9).

La partie mobile est formée par une culasse (10) de forme trapézoïdale. La culasse, réalisée en un matériau ferromagnétique, présente une largeur selon OX sensiblement égale à 3Xc+Xo+3E. Elle présente une cavité parallélépipédique (11) à l'intérieur de laquelle est partiellement encastré un aimant permanent mince (12) aimanté perpendiculairement à OX. Cet aimant mince (12) présente une largeur sensiblement égale à Xc+Xo+E.

La culasse se prolonge de part et d'autre de l'aimant (12) par des prolongements ferromagnétiques (13, 14) de largeur sensiblement égales à Xc+E.

L'aimant (12) est partiellement enchâssé dans la culasse (10), la profondeur e de la cavité étant choisie de manière à optimiser la force pour l'application donnée.

Un jeu de quelques dixièmes de millimètre subsiste entre la surface de l'aimant et la surface des pôles statoriques.

Pour une profondeur de cavité e bien choisie, le terme de force $F_{ni2}$ est sensiblement négligeable sur la course utile. La force, sur la course utile Xc, produite par la circulation d'un nombre d'ampères-tours nI dans chacune des deux bobines a pour valeur :

$$F = 2.\ Br.\ L/(2.E-e).Z.2.nI,$$

où

*    Br désigne l'induction rémanente de l'aimant
*    L désigne l'épaisseur de l'aimant
*    E désigne l'entrefer entre le fond de la cavité dans laquelle est placé l'aimant et le plan passant par la surface des pôles statoriques, sans déduction de l'épaisseur de l'aimant.
*    e désigne la profondeur de la cavité
*    Z désigne la largeur de la piste utile de l'aimant perpendiculairement au plan de la figure 1
*    nI désigne le nombre d'ampère-tour dans chaque bobine.

A titre d'exemple,

E = 1,5 mm ;
L = 1,2 mm ;
e = 0.6 mm ;

Avantageusement, l'aimant unique (12) est aimanté après mise en place dans la culasse (10).

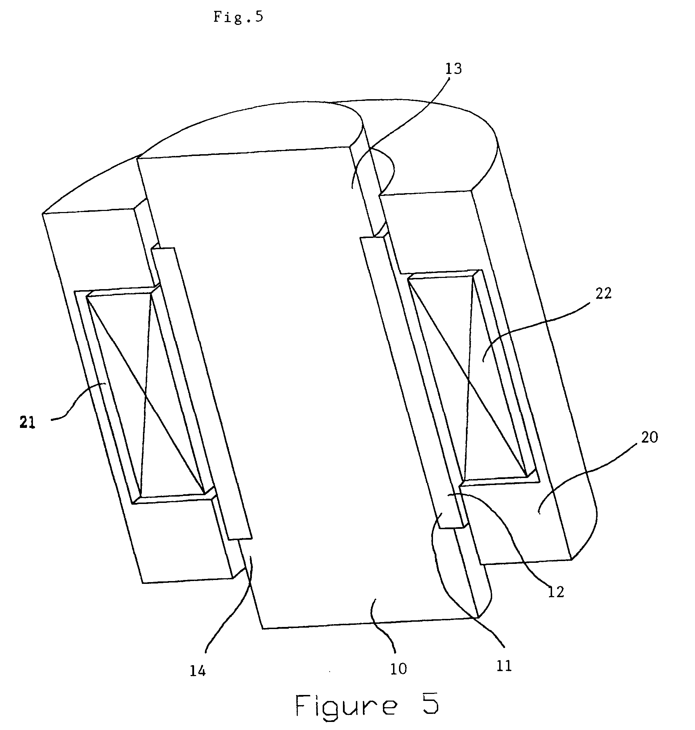

La figure 5 représente une variante de réalisation de forme cylindrique. L'aimant (12) de forme cylindrique est logé dans une cavité tubulaire (11) de profondeur e formée dans une culasse mobile tubulaire (10). De part et d'autre de l'aimant (12), la culasse mobile (10) présente des prolongements latéraux (13, 14). La partie statorique (1) est composée d'une pièce statorique (20) de forme cylindrique. Cette pièce statorique est disposée à l'extérieure de la culasse mobile (10), de façon concentrique. Elle présente un logement intérieur (21) pour recevoir une bobine électrique (22) de forme tubulaire.

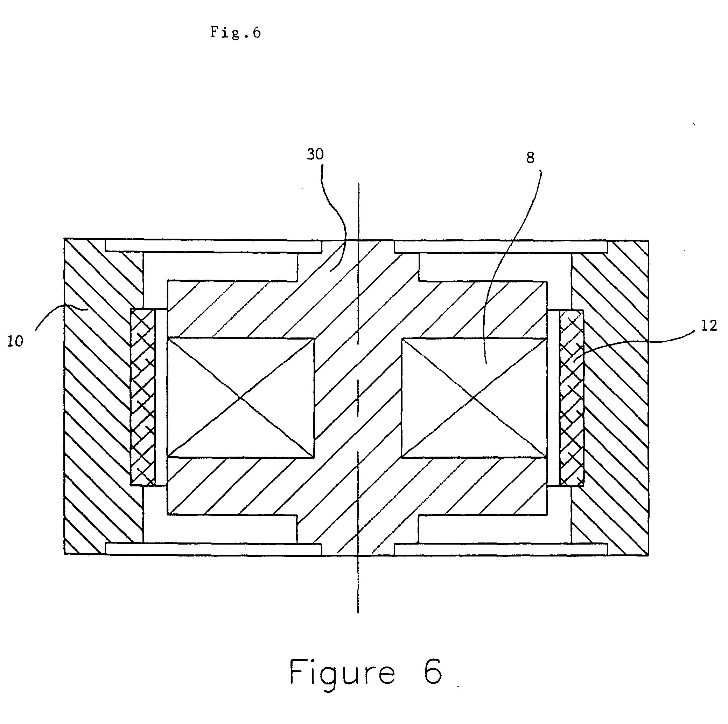

La figure 6 représente une variante de réalisation dans laquelle la culasse mobile (10) est extérieure.

Elle entoure la partie statorique (30) placée à l'intérieure de la culasse mobile, de façon coaxiale.

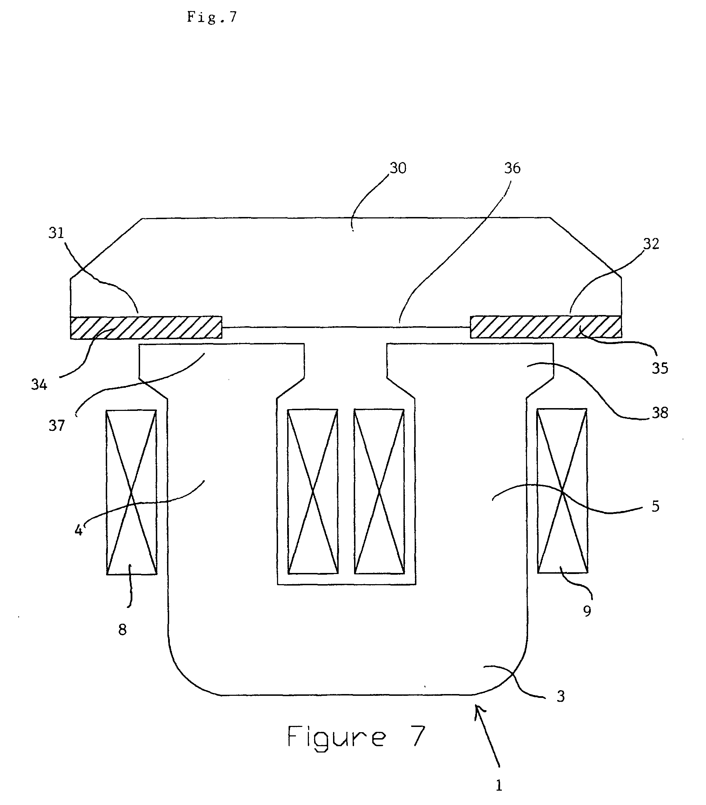

La figure 7 représente une variante de réalisation. La partie statorique (1) est formée par une pièce en un matériau ferromagnétique (3) présentant deux branches (4, 5) présentant des épanouissements polaires (37, 38). Chacune des branches statoriques (4, 5) est entourée par une bobine électrique (8, 9).

La culasse (30) présente à ses extrémités deux cavités (31, 32) dans lesquels sont partiellement encastrés des aimants (34, 35) de largeur selon OX sensiblement égale à Xc+E. Dans la zone comprise entre les deux aimants (34, 35), la culasse ferromagnétique présente une zone partiellement saillante (36) d'épaisseur e, choisie de manière à optimiser la force, et de largeur selon OX sensiblement égale à Xo+E.

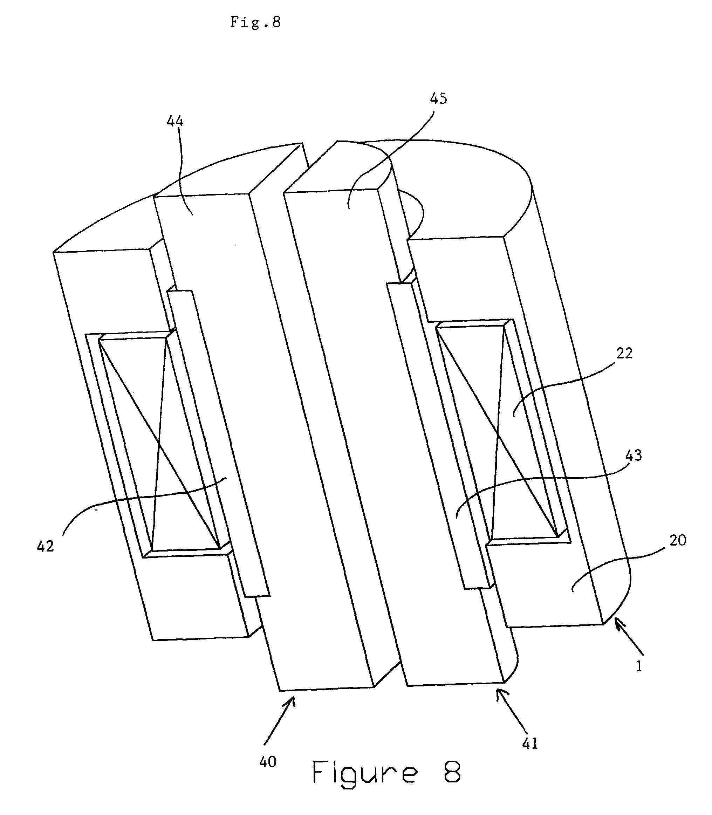

La figure 8 représente une variante de réalisation avec deux parties mobiles (40, 41) se déplaçant, sous l'effet du courant, dans la même direction OX mais dans un sens opposé. Chacune des parties mobiles présente un aimant (42, 43) partiellement encastré dans une culasse ferromagnétique (44, 45). Les aimants des deux parties mobiles sont aimantés dans le sens contraire.

La partie statorique (1) est composée d'une pièce statorique (20) de forme cylindrique. Cette pièce statorique est disposée à l'extérieure des culasses mobiles (44, 45). Elle présente un logement intérieur (21) dans lequel est placé une bobine électrique (22) de forme tubulaire.

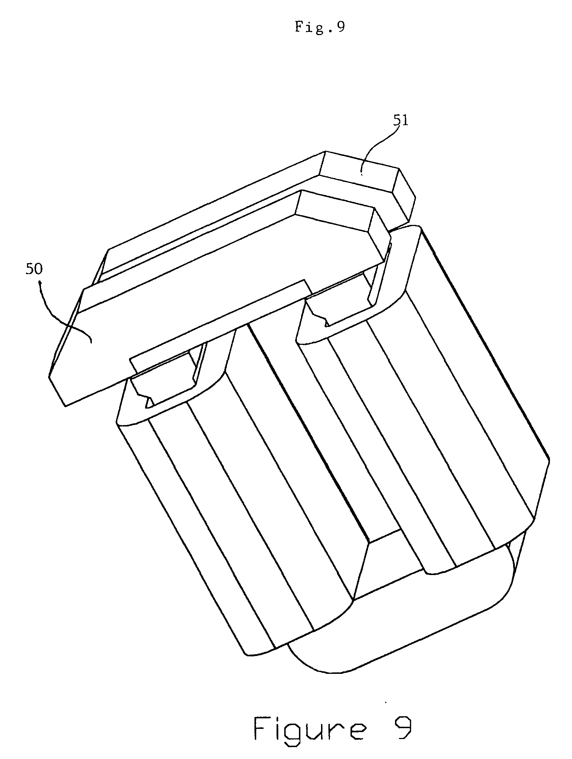

La figure 9 représente une variante de réalisation avec deux parties mobiles (50, 51) se déplaçant, sous l'effet du courant, dans la même direction OX mais dans un sens opposé.

## Revendications

**1.** Actionneur électromagnétique polarisé, linéaire et monophasé, comportant un stator bobiné (1) et au moins une partie mobile (2) dans la direction OX, avec une course utile Xc,

*    le stator en matériau magnétique doux présentant deux pôles (6,7) ou groupes de pôle,

  -    chacun d'une largeur au moins égale à Xc,
  -    espacés de Xo,
  -    disposés, soit dans une même surface plane parallèle à OX, soit dans une même surface cylindrique d'axe OX,
  -    et polarisés de signe contraire par au moins une bobine (8,9),

*    chaque partie mobile avec le courant alimentant la bobine, dans une direction dépendant du signe du courant, comporte une culasse (10) en matériau magnétique doux et au moins un aimant (12) lié à cette culasse,

- la culasse comportant en regard du stator trois parties,

  - parallèles aux pôles du stator,
  - se déplaçant parallèlement à ces pôles,
  - à une distance minimale constante Yo mesurée perpendiculairement à OX pour la ou les parties les plus rapprochées,

- le ou les aimants ayant

  - leurs pôles parallèles aux pôles du stator,
  - une même épaisseur L mesurée perpendiculairement à OX,

  **caractérisé en ce que**,
- le ou les aimants d'une partie mobile

  - sont partiellement encastrés dans une cavité de la culasse mobile du côté des pôles du stator, à une profondeur e telle que 0.1L < e < 0.9L,
  - se déplacent avec la culasse parallèlement aux pôles du stator à une distance minimale constante E-L, E étant la distance mesurée perpendiculairement à OX entre les pôles du stator et le fond de la cavité,
  - ont une aimantation perpendiculaire à OX et dans le même sens s'il y a plusieurs aimants,

- la culasse a une longueur mesurée suivant OX au moins égale à 3Xc+Xo et est située à une distance minimale du stator égale à Yo=E-e supérieure à E-L.

2. Actionneur linéaire selon la revendication 1 **caractérisé en ce que** l'organe mobile (2) présente un aimant (12) partiellement encastré dans une cavité (11) située sensiblement au milieu de la culasse ferromagnétique (10), la cavité (11) et l'aimant (12) ayant une largueur dans la direction OX au moins égale à Xc+Xo.

3. Actionneur linéaire selon la revendication 1 **caractérisé en ce que** l'organe mobile présente deux aimants (34, 35) placés dans deux cavités (31, 32) situées chacune à une extrémité de la culasse ferromagnétique (30), chaque cavité (31, 32) et chaque aimant (34, 35) ayant une largueur dans la direction OX supérieure ou égale à Xc.

4. Actionneur linéaire selon la revendication 1 **caractérisé en ce que** la profondeur e d'une cavité de la culasse est choisie aussi grande que possible en conservant une force, due à un courant constant, sensiblement constante sur toute la course utile, de préférence avec une variation inférieure à 15%, la profondeur de la cavité étant alors déterminée par la valeur maximale de e qui vérifie la condition

$$\frac{F_{nl^2}}{F_{nl}}<0.15$$

où $F_{nl}$ et $F_{nl2}$ sont les composantes de la force créée par l'actionneur, croissantes avec la profondeur de la cavité e, respectivement proportionnelle aux ampères-tours nI, et proportionnelle au carré des ampères-tours nI$^2$, de sorte que sur la course utile, sans saturation, le terme de force magnétostatique étant souvent négligeable, la force totale est sensiblement égale à

$$F{\approx}F_{nl} + F_{nl^2}$$

le rapport $\frac{F_{nl^2}}{F_{nl}}$ étant exprimé, en première approximation, par la relation

$$\frac{F_{nl^2}}{F_{nl}}{\approx}0.25{\cdot}\frac{X^2}{1-X}{\cdot}\frac{ni}{H_c{\cdot}L}$$

où X=e/E représente le coefficient d'encastrement d'un aimant dans une cavité de la culasse ferromagnétique, avec E désignant l'entrefer entre le fond de la cavité dans laquelle est placé l'aimant et le plan passant par la surface des pôles statoriques, sans déduction de l'épaisseur de l'aimant,
nI est le potentiel magnétique créé dans le circuit magnétique par le courant traversant la ou les bobines,
$H_c$.L est le potentiel magnétique d'un aimant avec $H_c$ son champ coercitif et L son épaisseur dans le sens de l'aimantation.

5. Actionneur linéaire selon la revendication 1 **caractérisé en ce que** la profondeur d'une cavité de la culasse est comprise entre 40 et 80% de l'épaisseur L d'un aimant mesurée dans le sens de l'aimantation, préférentiellement d'environ 60%.

6. Actionneur linéaire selon la revendication 1 **caractérisé en ce que** la structure statorique présente deux branches (4, 5) entourées chacune par une bobine électrique (8, 9).

7. Actionneur linéaire selon la revendication 1 **caractérisé en ce qu'**il comporte une structure statorique extérieure de forme tubulaire et présente un logement annulaire intérieur (21) dans lequel est logée une bobine annulaire (22), la partie mobile étant formée par une culasse annulaire (10) intérieure ferromagnétique présentant un logement annulaire (11) dans lequel est positionné un aimant annulaire (12) aimanté radialement.

8. Actionneur linéaire selon la revendication 1 **caractérisé en ce qu'**il comporte une structure statorique intérieure (30) de forme tubulaire et présente un logement annulaire extérieur dans lequel est logée une bobine annulaire (8), la partie mobile étant formée par une culasse annulaire extérieure (10) ferromagnétique présentant un logement annulaire dans lequel est positionné un aimant annulaire (12) aimanté radialement.

9. Actionneur linéaire selon la revendication 1 **caractérisé en ce qu'**il comporte deux parties mobiles (40, 41), les aimants d'une partie mobile étant aimantés dans le sens contraire des aimants (42, 43) de l'autre partie mobile, les deux parties mobiles se déplacent dans le sens opposé sous l'effet du courant.

10. Actionneur linéaire selon l'une au moins des revendications précédentes **caractérisé en ce que** les aimants de l'organe mobile sont aimantés, de préférence, après leur mise en place sur l'organe mobile.

11. Actionneur linéaire selon l'une au moins des revendications précédentes **caractérisé en ce que** le ou les aimants sont composés de plusieurs aimants juxtaposés.

**Patentansprüche**

1. Elektromagnetischer, vormagnetisierter, linearer und einphasiger Schalter mit einem gewickelten Stator (1) und mindestens einem in O-X-Richtung beweglichen Bauteil (2), mit einem Betätigungsweg Xc,

   wobei der Stator aus weichem, magnetischem Werkstoff zwei Pole (6, 7) oder Polgruppen aufweist,

   - jeweils mit einer Breite von mindestens Xc,
   - im Abstand Xo,
   - entweder auf derselben ebenen Fläche parallel zu O-X, oder auf derselben zylindrischen Fläche der O-X-Achse angeordnet,
   - und mit mindestens einer Spule (8, 9) ungleichnamig vormagnetisiert,

   wobei sich jedes bewegliche Bauteil durch den die Spule speisenden Strom in die dem Stromvorzeichen entsprechende Richtung bewegt und über ein Magnetjoch (10) aus weichem magnetischem Werkstoff und mindestens einen mit diesem Magnetjoch verbundenen Magneten (12) verfügt,

   - wobei das Magnetjoch hinsichtlich des Stators 3 Teile umfasst,
   - zu den Statorpolen parallele Teile,
   - die sich parallel zu diesen Polen
   - in einer konstanten Mindestentfernung Yo, an dem nächsten Teil oder den nächsten Teilen senkrecht zu O-X gemessen, bewegen,
   - wobei der Magnet oder die Magneten
   - Pole parallel zu den Statorpolen aufweisen,
   - dieselbe senkrecht zu O-X gemessene Dicke L aufweisen,

     **dadurch gekennzeichnet,**
   - **dass** der Magnet oder die Magneten mit einem beweglichen Bauteil
   - mit einer Tiefe e wie beispielsweise $0.1L < e < 0.9L$ teilweise in eine Vertiefung des beweglichen Magnetjochs in der Nähe der Statorpole eingelassen sind,
   - sich mit dem Magnetjoch parallel zu den Statorpolen in einer konstanten Mindestentfernung von E-L bewegen, wobei E der senkrecht zu O-X zwischen den Polen des Stators und dem Boden der Vertiefung gemessene Abstand ist,
   - über eine Magnetisierung senkrecht zu OX und, wenn es sich um mehrere Magneten handelt, in gleicher Richtung, verfügen,
   - das Magnetjoch eine in Richtung O-X gemessene Länge von mindestens $3Xc+Xo$ und einen Mindestabstand vom Stator von $Yo=E-e$ größer als E-L aufweist.

2. Linearer Schalter nach Anspruch 1, **dadurch gekennzeichnet, dass** das bewegliche Organ (2) einen Magneten (12) aufweist, der teilweise in eine Vertiefung (11) eingelassen ist, die sich in der Mitte des ferromagmetischen Magnetjochs (10) befindet, wobei die Vertiefung (11) und der Magnet (12) eine Breite in Richtung O-X von mindestens $Xc + Xo$ aufweisen.

3. Linearer Schalter nach Anspruch 1, **dadurch gekennzeichnet, dass** das bewegliche Organ zwei Magneten (34, 35) aufweist, die sich in zwei Vertiefungen (31,32) jeweils an einem Ende des ferromagnetischen Magnetjochs (36) befinden, wobei jede Vertiefung (31, 32) und jeder Magnet (34, 35) eine Breite in O-X-Richtung aufweist, die größer oder gleich Xc ist.

4. Linearer Schalter nach Anspruch 1, **dadurch gekennzeichnet, dass** die Tiefe e einer Magnetjochvertiefung so groß wie möglich gewählt wird, wobei eine über den gesamten Betätigungsweg genau konstante Kraft durch einen konstanten Strom beibehalten wird, vorzugsweise mit einer Schwankung unterhalb 15 %, wobei die Tiefe der Vertiefung durch den Höchstwert von e bestimmt wird, so dass

$$\frac{F_{nl2}}{F_{nl}} < 0.15$$

ist, wobei $F_{n1}$ und $F_{nl2}$ Komponenten der Kraft sind, die durch den Schalter bewirkt wird, und mit der Tiefe e der Vertiefung zunehmen, beziehungsweise proportional zu den Amperewindungen nl und proportional im Quadrat zu den Amperewindungen $nl^2$, so dass die Gesamtkraft für den Betätigungsweg ohne magnetische Sättigung, wobei der Magnetkraftterm häufig vernachlässigbar ist, sich errechnet aus

$$F \approx F_{nl} + F_{nl2}$$

wobei der Verhältniswert $\frac{F_{nl2}}{F_{nl}}$ in einer ersten Approximation durch die Relation

$$\frac{F_{nl2}}{F_{nl}} \approx 0.25 \cdot \frac{X^2}{1-X} \cdot \frac{ni}{H_c \cdot L}$$

ausgedrückt wird, in der X.e/E für den Einlassungskoeffizienten eines Magneten in eine Vertiefung des ferromagnetischen Magnetjochs steht, mit E der Zwischenspalt zwischen dem Boden der Vertiefung, in die der Magnet eingesetzt wird, und der an den Statorpolen verlaufenden Fläche, ohne Abzug der Magnetdicke, bezeichnet wird,

nl für das magnetische Potential steht, das in dem magnetischen Kreis durch den durch die Spule oder die Spulen fließenden Strom entsteht,

$H_c \cdot L$ für das magnetische Potential eines Magneten steht, wobei mit $H_c$ sein Koerzitivfeld und mit L seine Dicke in Magnetisierungsrichtung bezeichnet wird.

5. Linearer Schalter nach Anspruch 1, **dadurch gekennzeichnet, dass** die Tiefe einer Magnetjochvertiefung zwischen 40 und 80 % der Dicke L eines in Magnetisierungsrichtung gemessenen Magneten, vorzugsweise etwa 60 %, beträgt.

6. Linearer Schalter nach Anspruch 1, **dadurch gekennzeichnet, dass** die Statorkonstruktion zwei Arme (4,5) aufweist, die jeweils von einer elektrischen Spule (8, 9) umgeben sind.

7. Linearer Schalter nach Anspruch 1, **dadurch ge-**

**kennzeichnet, dass** er eine äußere Statorkonstruktion in Röhrenform umfasst und einen inneren ringförmigen Sitz (21) aufweist, in den eine Ringspule (22) eingesetzt ist, wobei der bewegliche Teil durch ein ringförmiges, ferromagnetisches, inneres Magnetjoch (10) gebildet wird, das einen ringförmigen Sitz (11) aufweist, in den ein radial magnetisierter ringförmiger Magnet (12) eingesetzt ist.

8. Linearer Schalter nach Anspruch 1, **dadurch gekennzeichnet, dass** er eine innere Statorkonstruktion (30) in Röhrenform umfasst und einen äußeren ringförmigen Sitz aufweist, in den eine Ringspule (8) eingesetzt ist, wobei der bewegliche Teil durch ein ringförmiges, ferromagnetisches, äußeres Magnetjoch (10) gebildet wird, das einen ringförmigen Sitz aufweist, in den ein radial magnetisierter ringförmiger Magnet (12) eingesetzt ist.

9. Linearer Schalter nach Anspruch 1, **dadurch gekennzeichnet, dass** er zwei bewegliche Teile (40, 41) umfasst, wobei die Magneten eines beweglichen Teils in Gegenrichtung zu den Magneten (42, 43) des anderen beweglichen Teils magnetisiert sind und sich die zwei beweglichen Teile unter der Wirkung des Stroms in entgegengesetzter Richtung bewegen.

10. Linearer Schalter nach mindestens einem der vorgenannten Ansprüche, **dadurch gekennzeichnet, dass** die Magneten des mobilen Organs vorzugsweise nach Einsetzen in das bewegliche Organ magnetisiert werden.

11. Linearer Schalter nach mindestens einem der vorgenannten Ansprüche, **dadurch gekennzeichnet, dass** der Magnet oder die Magneten aus mehreren gegenüberliegenden Magneten zusammengesetzt ist/sind.

**Claims**

1. A linear and monophase polarized electro-magnetic actuator, including a wound stator (1) and at least one mobile portion (2) in the OX direction, with a useful working stroke Xc, wherein

    the stator in soft magnetic material has two poles (6,7) or pole groups,

    - each with a width at least equal to Xc,
    - separated by Xo
    - positioned, either in a same identical planar surface parallel to OX or in a same cylindrical surface with axis OX,
    - and polarized with opposite signs by at least one coil (8,9),

each mobile part with the current energizing the coil, in a direction depending on the sign of the current, includes a yoke (10) in soft magnetic material and at least one magnet (12) bound to this yoke,

- the yoke including, facing the stator, three portions,
- parallel to the poles of the stator,
- moving parallel to these poles,
- at a constant minimal distance Yo measured perpendicularly to OX for the closest part(s),
- the magnet(s) having
- their poles parallel to the poles of the stator,
- a same thickness L measured perpendicularly to OX,
  **characterized in that**
- the magnet(s) of a mobile portion
- is(are) partly embedded in a cavity of the mobile yoke on the side of the poles of the stator, at a depth e such as $0.1L < e < 0.9L$,
- move(s) with the yoke parallel to the poles of the stator at a constant minimal distance E-L (E being the distance measured perpendicularly to OX between the poles of the stator and the bottom of the cavity,
- have a magnetization perpendicular to OX and in the same direction if there are several magnets,
- the yoke has a length measured along OX at least equal to 3Xc+Xo and is located at a minimal distance from the stator equal to Yo=E-e larger than E-L.

2. The linear actuator according to claim 1, **characterized in that** the mobile unit (2) has a partly embedded magnet (12) in a cavity (11) substantially located in the middle of the ferromagnetic yoke (10), the cavity (11) and the magnet (12) having a width in the OX direction at least equal to Xc+Xo.

3. The linear actuator according to claim 1, **characterized in that** the mobile unit has two magnets (34, 35) placed in two cavities (31, 32) each located at one end of the ferromagnetic yoke (30), each cavity (31, 32) and each magnet (34, 35) having a width in the OX direction larger than or equal to Xc.

4. The linear actuator according to claim 1, **characterized in that** the depth e of a cavity of the yoke is selected so as to be as large as possible while maintaining a force, due to a constant current, substantially constant over the entire working stroke, preferably with a variation less than 15%, the depth of the cavity being then determined by the maximum value of e which meets the condition

$$\frac{F_{nl^2}}{F_{nl}} < 0.15$$

wherein $F_{nl}$ and $F_{nl2}$ are components of the force generated by the actuator, which increase with the depth e of the cavity, proportional to the number of ampere-turns nI_, so that on the working stroke, without any saturation, the magnetostatic force term is often insignificant, the total force being substantially equal to

$$F \approx F_{nl} + F_{nl^2}$$

the $\frac{F_{nl^2}}{F_{nl}}$ ratio being expressed as, as a first approximation by the relationship

$$\frac{F_{nl^2}}{F_{nl}} \approx 0.25 \cdot \frac{X^2}{1-X} \cdot \frac{ni}{H_c \cdot L}$$

wherein X=e/E represents the embedding factor of a magnet in a cavity of the electromagnetic yoke, with E referring to the air gap between the bottom of the cavity wherein the magnet is placed and the plane passing through the surface of the stator poles, without subtracting the thickness of the magnet,

nI is the magnetic potential generated in the magnetic circuit by the current flowing through the coil(s),

$H_c.L$ is the magnetic potential of a magnet with $H_c$ its coercive field and L its thickness in the direction of the magnetization.

5. The linear actuator according to claim 1, **characterized in that** the depth of the cavity of the yoke is between 40 and 80% of the thickness L of a magnet measured in the direction of the magnetization, preferably about 60%.

6. The linear actuator according to claim 1, **characterized in that** the stator structure has two branches (4,5) each surrounded by an electrical coil (8,9).

7. The linear actuator according to claim 1, **characterized in that** it includes an external stator structure of a tubular shape and has an inner ringlike housing (21) wherein a ringlike coil (22) is housed, the mobile portion being formed by a ferromagnetic inner ringlike yoke (10) having a ringlike housing (11) wherein a radially magnetized ringlike magnet (12) is positioned.

8. The linear actuator according to claim 1, **characterized in that** it includes an inner stator structure (30) of a tubular shape and has an outer ringlike housing wherein a ringlike coil (8) is housed, the mobile portion being formed by a ferromagnetic outer ringlike yoke (10) having a ringlike housing wherein a radially magnetized ringlike magnet (12) is positioned.

9. The linear actuator according to claim 1, **characterized in that** it includes two mobile portions (40, 41), the magnets of a mobile portion being magnetized in the opposite direction relatively to the magnets (42, 43) of the other mobile portions, both mobile portions move in the opposite direction under the effect of the current.

10. The linear actuator according to any of the preceding claims, **characterized in that** the magnets of the mobile unit are preferably magnetized after their placing on the mobile unit.

11. The linear actuator according to any of the preceding claims, **characterized in that** the magnet(s) consist(s) of several juxtaposed magnets.

FIG.1

FORCE
0.125 N/cm

I = 3A : 12 watts

I = 2A

I = 1A

I = -1A

I = -2A

I = -3A

EP 0 974 185 B1

Course utile = 0,5 mm

FIG.2

Fig.3

Figure 3

Fig.4

Figure 4

Fig.5

Figure 5

Fig.6

Figure 6

Fig.7

Figure 7

Fig.8

44   45

42   22

43

40   41   20   1

# Figure 8

Fig.9

Figure 9